# EUROPEAN PATENT APPLICATION

(11) **EP 2 042 370 A1**
(43) Date of publication of application: **01.04.2009**
(21) Application number: 07253880.4
(22) Date of filing: 28.09.2007
(51) Int. Cl.: B60P 1/16

(54) **Dumper vehicle**

(71) Applicant: Wordsworth Holdings plc, Grantham Lincolnshire NG31 6JE (GB)
(72) Inventor: Dennis, Alan Edward, Grantham Lincolnshire NG31 6JE (GB)
(74) Representative: Lacey, Dean Andrew

(57) **Abstract**

A dumper vehicle (10) includes a chassis (12), a load carrying skip (14) mounted on the chassis (12), a hydraulic system (28) and at least one hydraulic device (30) permanently connected to the hydraulic system (28). The hydraulic system (28) is selectively operable to provide hydraulic power to the at least one permanently connected hydraulic device (30) and is also selectively operable to provide hydraulic power to a hydraulic accessory (36) which is removably connectable to the hydraulic system (28).

## Description

Embodiments of the present invention relate to dumper vehicles.

Dumper vehicles (also commonly known as dumpers) are utilised, typically on building and construction sites, for carrying bulk loads. A typical dumper vehicle comprises a load carrying skip which is pivotable and/or rotatable to allow loads to be dumped therefrom and this is conventionally located in front of the position at which an operator of the vehicle would be seated.

According to one aspect of the present invention, there is provided a dumper vehicle comprising a chassis, a load carrying skip mounted on the chassis, a hydraulic system, and at least one hydraulic device permanently connected to the hydraulic system, the hydraulic system being selectively operable to provide hydraulic power to the at least one permanently connected hydraulic device, and the hydraulic system being selectively operable to provide hydraulic power to a hydraulic accessory removably connectable to the hydraulic system.

The dumper vehicle may include an engine. The hydraulic system may be arranged to utilise power taken off the engine to provide hydraulic power to a hydraulic accessory when connected to the hydraulic system.

The hydraulic system may be operable to provide power to a hydraulic accessory when the at least one hydraulic device is operable or inoperable.

The hydraulic system may include a hydraulic pump. The hydraulic pump may be arranged to be driven by the engine and may be operable to provide hydraulic power to the hydraulic accessory.

The hydraulic pump may be arranged to be driven directly by the engine. The hydraulic pump may be arranged to be driven indirectly by the engine.

The hydraulic system may include at least one hydraulic circuit which may be selectively operable to provide hydraulic power to a removably connected hydraulic accessory.

The hydraulic system may include first and second hydraulic circuits. The hydraulic device may be permanently connected to the first hydraulic circuit which may be selectively operable to provide hydraulic power to the hydraulic device. The hydraulic accessory may be removably connectable to the second hydraulic circuit which may be selectively operable to provide hydraulic power to the hydraulic accessory.

The first hydraulic circuit may be a closed-loop hydraulic circuit. The hydraulic device may be a hydrostatic transmission.

The second hydraulic circuit may include a hydraulic pump. The hydraulic pump may be driven directly by the engine.

The at least one hydraulic device may be permanently connected to said at least one hydraulic circuit. The at least one hydraulic device may be arranged to receive hydraulic power selectively from said at least one hydraulic circuit.

The hydraulic accessory may be removably connectable to said at least one hydraulic circuit. The hydraulic accessory may be arranged to receive hydraulic power selectively from said at least one hydraulic circuit.

The at least one hydraulic circuit may be an open-loop hydraulic circuit. The at least one hydraulic device may be a hydraulic cylinder.

The at least one hydraulic circuit may include a hydraulic pump which may be driven indirectly by the engine. The hydraulic pump may be driven indirectly by the engine at a speed greater than the speed of the engine.

The hydraulic cylinder may be operable to steer the dumper vehicle or may be operable to pivot the load carrying skip to permit the dumping of loads therefrom.

The dumper vehicle may include a further hydraulic device and the hydraulic system may include a further hydraulic circuit to which the further hydraulic device may be permanently connected. The further hydraulic circuit may be selectively operable to provide hydraulic power to the further hydraulic device.

The further hydraulic circuit may be a closed-loop hydraulic circuit. The further hydraulic device may be a hydrostatic transmission.

Embodiments of the present invention will now be described by way of example only and with reference to the accompanying drawings, in which:-
Fig. 1 is a diagrammatic side view of a dumper vehicle;
Fig. 2 is a diagrammatic illustration of a first embodiment of a hydraulic system for a dumper vehicle;
Fig. 3 is a diagrammatic illustration of a second embodiment of a hydraulic system for a dumper vehicle; and
Fig. 4 is a diagrammatic illustration of a third embodiment of a hydraulic system for a dumper vehicle.

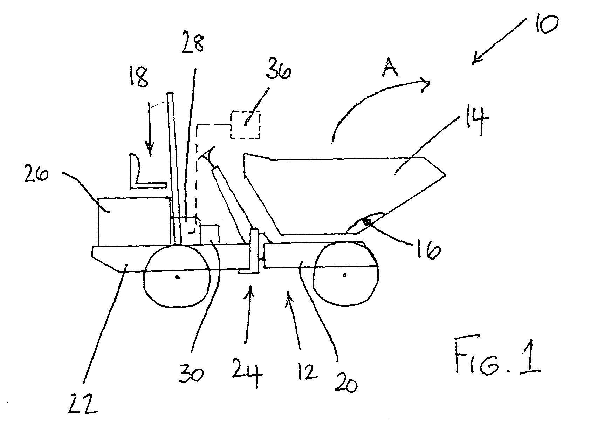

Referring to Fig. 1, there is shown generally a dumper vehicle 10 comprising a chassis 12 and a load carrying skip 14 mounted on the chassis 12. The load carrying skip 14 is designed to carry any desired load and is movable relative to the chassis 12 to enable carried loads to be dumped therefrom. In the illustrated embodiment, the load carrying skip 14 is pivotable about a horizontal tipping axis 16 generally in the direction of arrow A to permit the dumping of loads therefrom. As is clearly illustrated in Fig. 1, the load carrying skip 14 is mounted on the chassis 12 in front of the position 18 at which a driver sits when operating the vehicle 10. In embodiments of the invention, the load carrying skip may also be rotatable about a vertical axis to permit the sideways dumping of loads from the load carrying skip 14.

In some embodiments, the chassis 12 includes front and rear chassis members 20, 22 which are connected to each other by a multiple pivoting connection 24 that allows at least relative rotation between the front and rear chassis members 20, 22 in three degrees of freedom about three axes, namely a substantially vertical yaw axis, a substantially horizontal pitch axis, and a substantially horizontal roll axis. Relative movement between the front and rear chassis members 20, 22 about these axes improves the handling of the vehicle 10, the yaw axis in particular acting as a steering axis.

The dumper vehicle 10 also includes an engine 26, a hydraulic system 28 and at least one hydraulic device 30 (shown schematically in Fig. 1), for example a hydrostatic transmission or a steering or tip cylinder, which is permanently connected to the hydraulic system 28, and the hydraulic system 28 is selectively operable to provide hydraulic power to the permanently connected hydraulic device 30, as required.

In accordance with embodiments of the invention, the hydraulic system 28 is selectively operable to provide hydraulic power to a hydraulic accessory 36 which is removably connectable to the hydraulic system 28, for example via suitable hydraulic couplings. The hydraulic accessory 36 may be any hydraulically operated accessory which is separate from and not related to the operation of the dumper vehicle 10, and which would conventionally be powered by an independent hydraulic power pack. For example, the hydraulic accessory 36 could be a hydraulic drill, a hydraulic wrench, a hydraulic disc cutter, a hydraulic cable cutter, a hydraulic ground tool such as a post hole borer or an auger, a hydraulic water pump, a hydraulic electric generator. The hydraulic accessory 36 is not limited to the aforementioned accessories and may be any hydraulically powered accessory that is typically used on a building or construction site at which the dumper vehicle 10 would be conventionally used for earthmoving purposes.

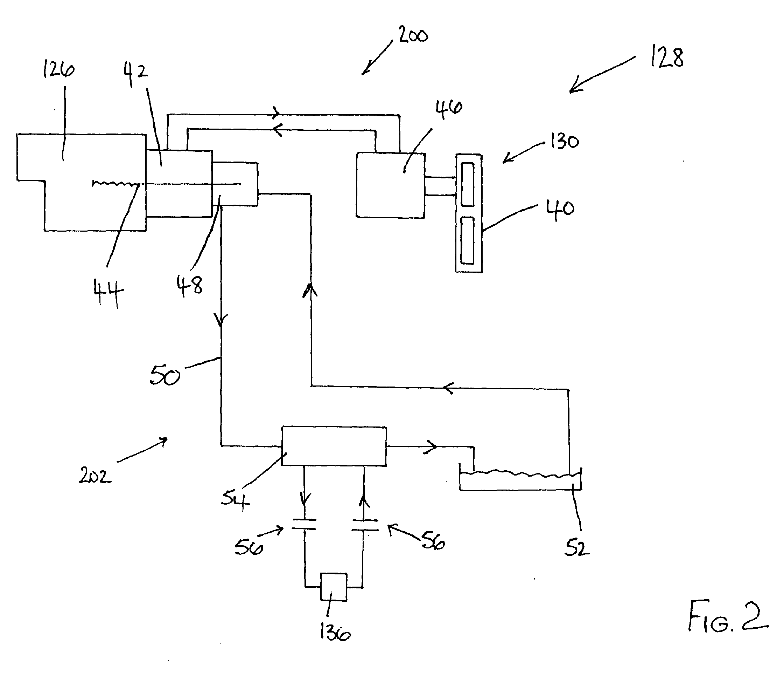

Referring now to Fig. 2, there is shown a first embodiment of a hydraulic system 128 for a dumper vehicle 10. Where features in Fig. 2 correspond to features in Fig. 1, they are designated with corresponding reference numerals, prefixed by the number '1'.

The hydraulic system 128 includes first and second hydraulic circuits 200, 202. The first hydraulic circuit 200 is a closed-loop hydraulic circuit and the hydraulic device 130, which is a hydrostatic transmission 40 fitted to the dumper vehicle 10 to drive the vehicle 10, is permanently connected to the first hydraulic circuit 200. In the illustrated embodiment, the closed-loop first hydraulic circuit 200 includes a variable displacement pump 42, which is driven directly by the engine 126 via an engine crank shaft or drive shaft 44 such that it rotates at engine speed, and a variable displacement motor 46 which is hydraulically driven by the variable displacement pump 42 and which is arranged to drive the hydrostatic transmission 40. The operation of the closed-loop first hydraulic circuit 200 and the associated hydrostatic transmission 40 will be well understood by those skilled in the art, and will not therefore be described further in this specification.

The second hydraulic circuit 202 of the hydraulic system 128 includes a hydraulic pump 48 which is mounted in tandem with the variable displacement pump 42 and driven directly by the engine 126, for example via the engine crank shaft or drive shaft 44, such that it rotates at engine speed.

The hydraulic pump 48 is connected, by suitable hydraulic hoses 50 and fittings, to a reservoir 52 containing hydraulic fluid for the second hydraulic circuit 202 and to a diverter valve 54 which is selectively operable, for example via solenoid control, to divert hydraulic fluid to a hydraulic accessory 136 removably connected to the second hydraulic circuit 202, for example via suitable hydraulic couplings 56.

In some embodiments, the hydrostatic transmission 40 may be inoperable whilst the second hydraulic circuit 202 is operable to supply hydraulic fluid, and thereby provide hydraulic power, to the hydraulic accessory 136 via the diverter valve 54. In other embodiments, the hydrostatic transmission 40 may be operable whilst the second hydraulic circuit 202 is operable to supply hydraulic fluid, and thereby provide hydraulic power, to the hydraulic accessory 136 via the diverter valve 54.

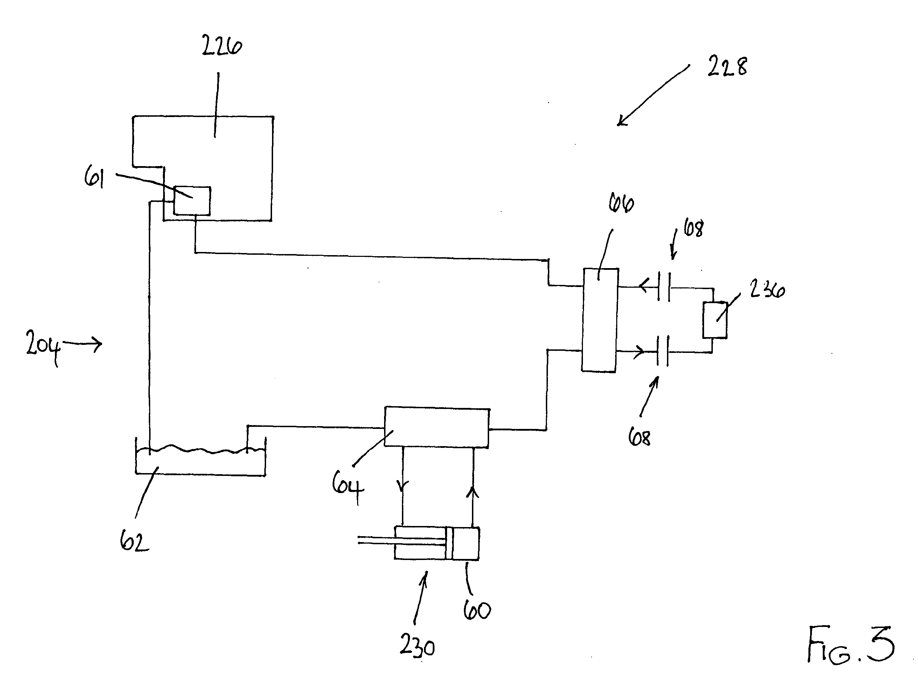

Referring now to Fig. 3, there is shown a second embodiment of a hydraulic system 228 for a dumper vehicle 10. Where features in Fig. 3 correspond to features in Figs. 1 and/or 2, they are designated with corresponding reference numerals, prefixed by the number '2'.

The hydraulic system 228 includes a single hydraulic circuit 204 and the hydraulic device 230 permanently connected to the hydraulic circuit 204 is a hydraulic cylinder 60, and this may for example be a tip cylinder which is operable to pivotally move the load carrying skip 14 about the horizontal tipping axis 16 or a steering cylinder which extends between the front and rear chassis members 20, 22 and which is operable to cause relative movement between the front and rear chassis members 20, 22 about the vertical yaw axis to steer the dumper vehicle 10.

In the illustrated embodiment, the hydraulic circuit 204, which is an open-loop hydraulic circuit, is operable to supply hydraulic fluid to the hydraulic cylinder 60 and includes a hydraulic pump 61, which is driven indirectly by the engine, for example via timing belts or timing chains, at a speed typically greater than the speed of the engine, a reservoir 62 containing hydraulic fluid and a diverter valve 64. The diverter valve 64 is selectively operable, for example via solenoid control, to permit or prevent the flow of hydraulic fluid to the hydraulic cylinder 60 to selectively control its operation.

The hydraulic circuit 204 also includes a diverter valve 66 which is selectively operable, for example via solenoid control, to divert hydraulic fluid to a hydraulic accessory 236 selectively connectable to the hydraulic circuit 204, for example via hydraulic couplings 68.

In some embodiments, the hydraulic cylinder 60 may be inoperable, for example the diverter valve 64 may prevent the flow of hydraulic fluid to and from the hydraulic cylinder 60, whilst the diverter valve 66 is operable to supply hydraulic fluid, and thereby provide hydraulic power, to the removably connected hydraulic accessory 236. In other embodiments, the hydraulic cylinder 60 may be operable, for example the diverter valve 64 may permit the flow of hydraulic fluid to and from the hydraulic cylinder 60, whilst the diverter valve 66 is operable to supply hydraulic fluid, and thereby provide hydraulic power, to the removably connected hydraulic accessory 236.

Due to the fact that the hydraulic pump 48 of the first embodiment of the hydraulic system 128 illustrated in Fig. 2 is driven directly by the engine 126, it is capable of providing greater hydraulic power output to a connected hydraulic accessory 136 than the hydraulic pump 61 of the second embodiment of the hydraulic system 228 illustrated in Fig. 3, in which the hydraulic pump 61 is indirectly driven by the engine 226, for example via timing belts or chains. This is because the timing belts/chains are incapable of catering for large hydraulic power demands without failure.

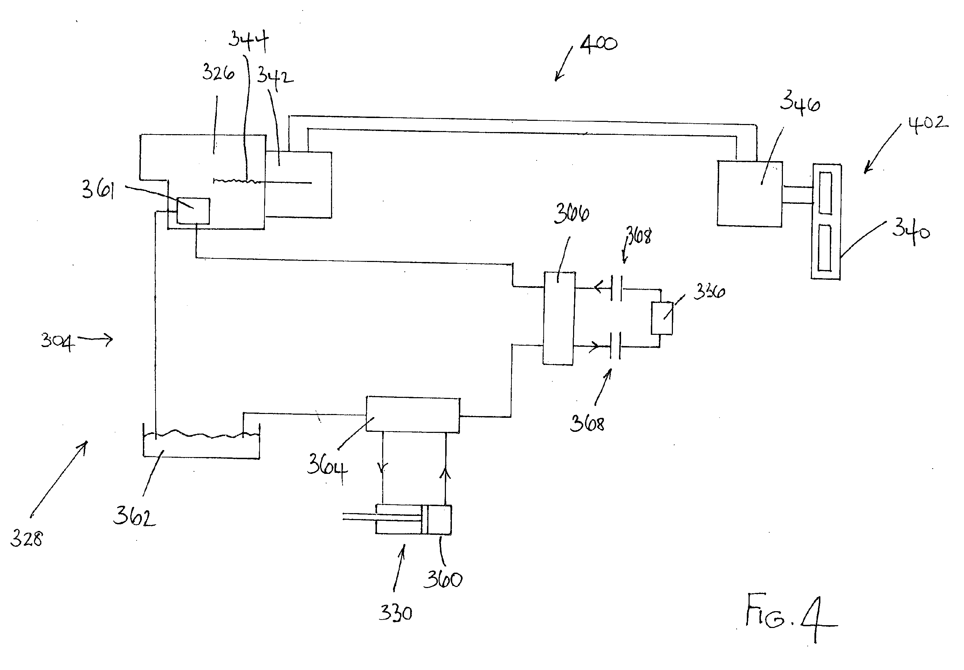

Referring now to Fig. 4, there is shown a third embodiment of a hydraulic system 328 for a dumper vehicle 10, which shares features in common with both the hydraulic system 128 of Fig. 2 and the hydraulic system 228 of Fig. 3. Where the hydraulic system 328 has features in common with the hydraulic systems of Figs. 1 to 3, these are designated with corresponding reference numerals, prefixed by the number '3'.

The hydraulic system 328 includes an open-loop hydraulic circuit 304 to which the hydraulic device 330, such as a hydraulic cylinder 360 as aforesaid, is permanently connected and to which the hydraulic accessory 336 is removably connectable. Thus, the permanently connected hydraulic device 330 and the removably connectable hydraulic accessory 336 both derive hydraulic power from the open-loop hydraulic circuit 304, in the manner described above in relation to the embodiment of Fig. 3.

As in the embodiment of Fig. 3, the open-loop hydraulic circuit 304 includes a hydraulic pump 361, which is driven indirectly by the engine 326, for example via timing belts or timing chains, at a speed typically greater than the speed of the engine 326, a reservoir 362 containing hydraulic fluid and a diverter valve 364. The diverter valve 364 is selectively operable, for example via solenoid control, to permit or prevent the flow of hydraulic fluid to the hydraulic cylinder 360 to selectively control its operation.

The open-loop hydraulic circuit 304 also includes a diverter valve 366 which is selectively operable, for example via solenoid control, to divert hydraulic fluid to a hydraulic accessory 336 selectively connectable to the hydraulic circuit 304, for example via hydraulic couplings 368.

The hydraulic system 328 also includes a further hydraulic circuit 400. This further hydraulic circuit 400 is a closed-loop hydraulic circuit equivalent to the first hydraulic circuit 200 of Fig. 2 and the hydraulic system 328 includes a further hydraulic device 402 in the form of a hydrostatic transmission 340 which receives hydraulic power from the further hydraulic circuit 400. As in the embodiment of Fig. 2, the further hydraulic circuit 400 includes a variable displacement pump 342, which is driven directly by the engine 326 via an engine crank shaft or drive shaft 344 such that it rotates at engine speed, and a variable displacement motor 346 which is hydraulically driven by the variable displacement pump 342 and which is arranged to drive the hydrostatic transmission 340.

There is thus provided a dumper vehicle 20 in which power take-off from the engine of the vehicle 20 can be used to drive a suitable hydraulic pump to provide hydraulic power to a removably connectable hydraulic accessory, for example as described above, which is not related to the operation of the dumper vehicle 20. The utilisation of the dumper vehicle 20 according to aspects of the invention is thus improved relative to existing dumper vehicles, which simply remain idle when not being used for their primary earthmoving function.

Although embodiments of the invention have been described in the preceding paragraphs with reference to various examples, it should be appreciated that various modifications to the examples given may be made without departing from the scope of the present invention, as claimed. For example, the arrangement of the hydraulic systems illustrated in Figs. 2 to 4 may be different.

## Claims

1. A dumper vehicle (10) comprising a chassis (12), a load carrying skip (14) mounted on the chassis (12), a hydraulic system (28, 128, 228, 328), and at least one hydraulic device (30, 130, 230, 330) permanently connected to the hydraulic system (28, 128, 228, 328), the hydraulic system (28, 128, 228, 328) being selectively operable to provide hydraulic power to the at least one permanently connected hydraulic device (30, 130, 230, 330), **characterised in that** the hydraulic system (28, 128, 228, 328) is selectively operable to provide hydraulic power to a hydraulic accessory (36, 136, 236, 336) removably connectable to the hydraulic system (28, 128, 228, 328).

2. A dumper vehicle according to claim 1, wherein the dumper vehicle (10) includes an engine (26, 126, 226, 326) and the hydraulic system (28, 128, 228, 328) is arranged to utilise power taken off the engine to provide hydraulic power to a hydraulic accessory (36, 136, 236, 336) when connected to the hydraulic system.

3. A dumper vehicle according to claim 1 or claim 2, wherein the hydraulic system (28, 128, 228, 328) is operable to provide power to a hydraulic accessory when the at least one hydraulic device is operable or inoperable.

4. A dumper vehicle according to claim 2 or claim 3, wherein the hydraulic system (28, 128, 228, 328) includes a hydraulic pump (48, 61, 361) arranged to be driven by the engine and operable to provide hydraulic power to the hydraulic accessory.

5. A dumper vehicle according to claim 4, wherein the hydraulic pump (48, 61, 361) is arranged to be driven directly or indirectly by the engine.

6. A dumper vehicle according to any of the preceding claims, wherein the hydraulic system (28, 128, 228, 328) includes at least one hydraulic circuit (202, 204, 304) selectively operable to provide hydraulic power to a removably connected hydraulic accessory (36, 136, 236, 336).

7. A dumper vehicle according to claim 6, wherein the hydraulic system includes first and second hydraulic circuits (200, 202), the hydraulic device (130) being permanently connected to the first hydraulic circuit (200) which is selectively operable to provide hydraulic power to the hydraulic device (130), and the hydraulic accessory (136) being removably connectable to the second hydraulic circuit (202) which is selectively operable to provide hydraulic power to the hydraulic accessory (136).

8. A dumper vehicle according to claim 7, wherein the first hydraulic circuit (200) is a closed-loop hydraulic circuit and the hydraulic device (130) is a hydrostatic transmission (40).

9. A dumper vehicle according to claim 7 or claim 8, wherein the second hydraulic circuit (202) includes a hydraulic pump (48) driven directly by the engine (126).

10. A dumper vehicle according to claim 6, wherein the hydraulic device (230, 330) is permanently connected to said at least one hydraulic circuit (204, 304) and arranged to receive hydraulic power selectively from said at least one hydraulic circuit (204, 304).

11. A dumper vehicle according to claim 10, wherein the hydraulic accessory (236, 336) is removably connectable to said at least one hydraulic circuit (204, 304) and arranged to receive hydraulic power selectively from said at least one hydraulic circuit (204, 304).

12. A dumper vehicle according to claim 10 or claim 11, wherein said at least one hydraulic circuit (204, 304) is an open-loop hydraulic circuit and said hydraulic device (230, 330) is a hydraulic cylinder (60, 360).

13. A dumper vehicle according to claim 12, wherein said at least one hydraulic circuit (204, 304) includes a hydraulic pump (61, 361) driven indirectly by the engine (226, 326).

14. A dumper vehicle according to claim 12 or claim 13, wherein the hydraulic cylinder (60, 360) is operable to steer the dumper vehicle or to pivot the load carrying skip to permit the dumping of loads therefrom.

15. A dumper vehicle according to any of claims 10 to 14, wherein the dumper vehicle includes a further hydraulic device (402) and the hydraulic system (328) includes a further hydraulic circuit (400) to which said further hydraulic device (402) is permanently connected, said further hydraulic circuit (400) being selectively operable to provide hydraulic power to said further hydraulic device (402).

16. A dumper vehicle according to claim 15, wherein said further hydraulic circuit (400) is a closed-loop hydraulic circuit and said further hydraulic device (402) is a hydrostatic transmission (340).
